# EUROPÄISCHE PATENTSCHRIFT

(11) **EP 1 476 408 B1**
(45) Veröffentlichungstag und Bekanntmachung des Hinweises auf die Patenterteilung: **21.03.2007**
(21) Anmeldenummer: 03704419.5
(22) Anmeldetag: 17.01.2003
(51) Int. Cl.: C07B 63/00

(54) **VERFAHREN ZUR TRENNUNG VON STOFFEN DURCH EXTRAKTION ODER WÄSCHE MIT IONISCHEN FLÜSSIGKEITEN**
METHOD FOR SEPARATING SUBSTANCES BY EXTRACTION OR BY WASHING THEM WITH IONIC LIQUIDS
PROCEDE DE SEPARATION DE SUBSTANCES PAR EXTRACTION OU LAVAGE PAR DES LIQUIDES IONIQUES

(30) Priorität: 19.02.2002 DE 10206808
(43) Veröffentlichungstag der Anmeldung: 17.11.2004
(73) Patentinhaber: Oxeno Olefinchemie GmbH, 45772 Marl (DE)
(72) Erfinder: RÖTTGER, Dirk, 45657 Recklinghausen (DE); NIERLICH, Franz, 45768 Marl (DE); KRISSMANN, Jörg, 63814 Mainschaff (DE); WASSERSCHEID, Peter, 50829 Köln (DE); KEIM, Wilhelm, 52074 Aachen (DE)
(74) Vertreter: Hirsch, Hans-Ludwig
(86) Internationale Anmeldenummer: PCT/EP2003/000430
(87) Internationale Veröffentlichungsnummer: WO 2003/070667

(56) Entgegenhaltungen:
- WO-A-01/40150
- WO-A-01/98239
- WO-A-02/34863

## Beschreibung

Die vorliegende Erfindung betrifft ein Verfahren zur Flüssig-Flüssig- oder Flüssig-Gas-Extraktion, wobei zur Extraktion eine flüssige Phase, enthaltend eine ionische Flüssigkeit, eingesetzt wird.

Zur großtechnischen Trennung von Stoffgemischen werden häufig Destillationen und Rektifikationen eingesetzt. Bei diesen Verfahren erfolgt eine Stofftrennung auf Grund unterschiedlicher Siedepunkte bzw. Dampfdrücke der Komponenten. Sind die zu trennenden Komponenten nicht flüchtig, in der Gasphase nicht stabil oder sind die Dampfdrücke der Komponenten zu ähnlich, kann eine einfache destillative Trennung nicht mehr durchgeführt werden. Auch wirtschaftliche Gründe führen oftmals dazu, dass Alternativen zu einfachen Trennverfahren wie Destillation oder Kristallisation gesucht werden. Eine Alternative hierzu ist die Flüssig-Flüssig-Extraktion, bei der eine oder mehrere der Komponenten aufgrund ihrer besseren Löslichkeit in einem Extraktionsmittel angereichert und über dieses abgetrennt werden.
Flüssig-Flüssig-Extraktionen sind Standardoperationen der Verfahrenstechnik. Eine ausführliche Übersicht findet sich beispielsweise in Ullmann's Encyclopedia of Industrial Chemistry, 5^{th} Edition, Wiley-VCH, Weinheim, Vol. B3, Chapter 6, "Liquid-Liquid-Extraction".

Das analoge Konzept, die bevorzugte Anreicherung (Absorption) einer oder mehrerer zu trennenden Komponenten in einer zweiten Phase, kann auch zur Trennung von Gasgemischen angewendet werden (im Folgenden als Flüssig-Gas-Extraktion bezeichnet). Technisch wird dies beispielsweise in Form einer Gaswäsche umgesetzt. Auch diese Prozesse gehören zu den Standardoperationen der Verfahrenstechnik und sind u.a. in Ullmann's Encyclopedia of Industrial Chemistry, 5^{th} Edition, Wiley-VCH, Weinheim,Vol. B3, Chapter 8, "Absorption" beschrieben.

Da die Trennleistung dieser Extraktionsverfahren erheblich durch die verwendeten Extraktionsmittel beeinflusst wird, wurden schon viele Flüssigkeiten zu diesem Zweck untersucht, so auch "Ionische Flüssigkeiten".

Der Begriff "Ionische Flüssigkeiten" hat sich in der Fachliteratur für bei Raumtemperatur flüssige Salze etabliert. Sie finden in letzter Zeit verstärkte Beachtung als "alternative" Lösungsmittel, insbesondere ihr Einsatz als Trägerphase für Katalysatoren. Ein Überblick findet sich in Angew. Chem. 2000, 112, 3926 bis 3945.

Ionische Flüssigkeiten wurden auch als Extraktionsmedium für Flüssig-Flüssig-Extraktionen diskutiert (Chem. Commun. 1989, S. 1765-1766). Hier wurde die Extraktion von organischen Verbindungen wie Phthalsäure oder Toluol aus einem Octan-1-ol/Wassergemisch mit einem Gemisch von Wasser und bestimmten ionischen Flüssigkeiten, die mit Wasser eine Mischungslücke aufweisen, vergleichend untersucht. Es zeigte sich, dass die Extraktion von geladenen oder ungeladenen Arylverbindungen aus einer leichten Wasserphase in die schwerere Phase der ionischen Flüssigkeiten mit einer ausreichenden Trennschärfe möglich ist. Diese Publikation offenbart die Verwendung von ionischen Flüssigkeiten bei der Extraktion von wasserlöslichen, d. h. polaren oder sogar ionischen organischen Verbindungen in eine weitere sehr polare, ionische Flüssigkeiten enthaltende Phase. Viele Trennprobleme der organischen Chemie betreffen jedoch unpolare Stoffe, vorzugsweise in Abwesenheit einer wässrigen Phase.

Beispielsweise ist die vollständige Trennung von C4-Kohlenwasserstoffen auf rein destillative Weise nicht wirtschaftlich möglich. Diese Mischung fällt beispielsweise bei Crackprozessen an. Neben den Zielprodukten Ethen und Propen fällt ein Crack-C4-Schnitt an, der als Hauptkomponenten 1,3-Butadien, 1-Buten, cis-2-Buten, trans-2-Buten, n-Butan, Isobuten und Isobutan enthält. Für die Weiterverarbeitung dieser Verbindungen sind unterschiedliche Konzepte in der Fachliteratur beschrieben. Am Anfang dieser Aufarbeitung steht meist die Abtrennung oder selektive Umsetzung des Butadiens (beispielsweise Destillation in Gegenwart von NMP, selektive Hydrierung des Butadiens zu den n-Butenen). Die Abtrennung des Isobutens vom 1-Buten ist destillativ nicht technisch sinnvoll realisierbar und wird daher in der Regel durch selektive Verätherung (beispielsweise mit Methanol zum Methyl-t-butylether) vorgenommen. Die destillative Trennung der 2-Butene von n-Butan, insbesondere des trans-2-Butens vom n-Butan ist technisch ebenfalls nicht befriedigend gelöst.

In WO 01/98239 wird die Abtrennung von Olefinen aus einer Mischung von Olefinen und anderen Verbindungen, wie Paraffinen, cyclischen Paraffinen und aromatischen Verbindungen mit einer ionischen Flüssigkeit, die ein mit Olefinen Komplexe bildendes Schwermetallsalz aufweist, beschrieben.

EP 0 216 991 beschreibt eine Trennung der 2-Butene vom n-Butan durch das Verfahren der Extraktivdestillation, wobei Morpholin als Lösungsmittel eingesetzt wird. Dadurch wird die Trennung zwar möglich, erfordert allerdings einen beträchtlichen Einsatz an Heizenergie (Dampf), was sich negativ auf die wirtschaftliche Attraktivität auswirkt.

Aufgabe der vorliegenden Erfindung war es daher, die Verwendbarkeit von ionischen Flüssigkeiten in wasserfreien Flüssig-Flüssig-Extraktionen oder Flüssig-Gas-Extraktionen zu untersuchen. Als wasserfrei werden hierbei Mischungen organischer Verbindungen verstanden, in denen die Wasserkonzentration weniger als 5.000 ppm beträgt.

Überraschenderweise wurde gefunden, dass mit Hilfe von ionischen Flüssigkeiten die Extraktion von ungeladenen organischen Verbindungen aus einem Stoffgemisch möglich ist.

Gegenstand der vorliegenden Erfindung ist daher ein Verfahren zur Flüssig-Flüssig-Extraktion oder Flüssig-Gas-Extraktion von Mischungen organischer Verbindungen, wobei eine oder mehrere Komponenten der Mischung ganz oder teilweise mit einer mindestens eine ionische Flüssigkeit enthaltenden Phase extrahiert werden.

Das erfindungsgemäße Verfahren wird ausschließlich zur Extraktion von Mischungen organischer Verbindungen eingesetzt. Dies bedeutet, dass die zur Extraktion eingesetzte Ionische Flüssigkeit und die zu extrahierende Mischung eine Mischungslücke aufweisen.
Weitere Phasen, wie z. B. eine Wasserphase, die mit der Ionischen Flüssigkeit nicht mischbar ist, werden nicht verwendet. Es ist jedoch möglich, eine Mischung aus Wasser und einer Ionischen Flüssigkeit als Extraktionsmittel einzusetzen.

Es ist möglich, mehrere ionische Flüssigkeiten im Gemisch zu verwenden. In der Regel wird allerdings eine Ionische Flüssigkeit als Extraktionsmittel oder Teil eines Extraktionsmittels verwendet.

Bei der erfindungsgemäßen Extraktion wird eine flüssige Phase, die mindestens eine ionische Flüssigkeit enthält, mit mindestens einer weiteren flüssigen oder gasförmigen Phase in Kontakt gebracht. Die Phase, die die Ionische Flüssigkeit enthält, kann vollständig aus dieser bestehen, oder weitere Komponenten enthalten, wie z. B. Kohlenwasserstoffe (gesättigte und/oder ungesättigte), Alkohole (Diole, Polyole), Cabonsäuren, Carbonsäureester, Lactone, Lactame (beispielsweise NMP), Amide, Nitrile (beispielsweise Acetonitril), Carbonate und Amine. Wird die Ionische Flüssigkeit nach der Extraktion aufgearbeitet und erneut ganz oder teilweise in der Extraktion eingesetzt, können auch noch Reste der Komponenten aus der vorherigen Extraktion enthalten sein. Sofern die Ionsiche Flüssigkeit mit Wasser mischbar ist, ist auch ein entsprechendes wässriges System denkbar.

Die andere Phase, d. h. die zu extrahierende Phase enthält kein oder praktisch kein Wasser und den zu extrahierenden Stoff in gelöster Form. Mit Hilfe des erfindungsgemäßen Verfahrens können Mischungen organischer Verbindungen extrahiert werden. Solche Mischungen liegen beispielsweise vor, wenn der zu extrahierende Stoff unter den Extraktionsbedingungen eine Flüssigkeit ist, und von einer anderen Flüssigkeit getrennt werden soll. Bei Flüssig-Gas-Extraktionen liegt in der Gasphase eine Mischung von Gasen vor.

Wird die Ionische Flüssigkeit als Gemisch mit weiteren Komponenten als Extraktionsmittel eingesetzt, so sollte der Gewichtsanteil der Ionischen Flüssigkeit in der Extraktionsphase mindestens 25 Gew.-%, bevorzugt 50-100 Gew.-%, besonders bevorzugt 80-100 Gew% betragen.

Die Extraktion im erfindungsgemäßen Verfahren beruht nur auf der unterschiedlichen Löslichkeit einzelner Komponenten in der die Ionische Flüssigkeit enthaltenden Phase, nicht auf dem selektiven Austausch von Anionen oder Kationen zwischen den einzelnen Phasen.

Das Verfahren ist zur Extraktion von Mischungen organischer Verbindungen, die die gleiche Anzahl von Kohlenstoffatomen enthalten (z. B. ein Crack-C₄-Schnitt) oder sogar Isomerer Verbindungen (z. B. Isobuten und n-Buten), bevorzugt von Kohlenwasserstoffen, geeignet. Einsatzmöglichkeiten für das erfindungsgemäße Verfahren der Flüssig-Flüssig-Extraktion sind beispielsweise die Extraktion von Olefinen aus einer Mischung von Olefinen und Aliphaten, die Extraktion von mehrfach ungesättigten Verbindungen wie Butadien oder Acetylen aus einer Mischung von Monoolefinen, Di- und Polyenen und Aliphaten, die Extraktion von aromatischen Verbindungen aus einer Mischung von aliphatischen und aromatischen Verbindungen, die Extraktion von Aldehyden aus Mischungen von verschiedenen Aldehyden oder z. B. die Extraktion von Alkoholen aus Mischungen von verschiedenen Alkoholen.

Bevorzugt eingesetzt wird das Verfahren, wenn die Mischungen aus organischen Verbindungen gleicher Kohlenstoffzahl bestehen, beispielsweise zur Extraktion von Butadien (meist zusammen mit Alkinen, 1,2-Butadien und Vinylacetylen) aus Mischungen von C4-Kohlenwasserstoffen, die Extraktion von Butenen aus Mischungen von Butenen und Butanen, die Abtrennung von Isobuten von anderen C4-Kohlenwasserstoffen, die Trennung von Propen und Propan, die Abtrennung von Isopren aus Mischungen von C5-Kohlenwasserstoffen oder die Trennung von 2-Methylbutanal und 3-Methylbutanal.

Die eigentliche Durchführung der Extraktion erfolgt nach dem Stand der Technik.

Es sind in der Fachliteratur diverse technische Ausführungen von Flüssig-Flüssig-Extraktionen bekannt (beispielsweise Säulen, Mixer-Settler-Kombinationen, Zentrifugal-Extraktoren). Weitere Beispiele sind in Ullmann's Encyclopedia of Industrial Chemistry, 5^{th} Edition, Wiley-VCH, Weinheim, Vol. B3, Chapter 6, "Liquid-Liquid-Extraction" beschrieben. Bevorzugt wird der Einsatz von Verfahren, in denen die Phasen im Gegenstrom geführt werden. Bevorzugt sind weiterhin Verfahren die isotherm betrieben werden oder bei denen sich ein Temperaturgradient während der Extraktion nur auf Grund unterschiedlicher Zulauftemperaturen von Extraktionsmittel und der zu extrahierenden Mischung einstellt; das erfindungsgemäße Verfahren wird somit nicht unter destillativen Bedingungen durchgeführt. Das erfindungsgemäße Verfahren wird ebenfalls nicht unter den Bedingungen einer Extraktiv-Rektifikation durchgeführt. Bevorzugt sind weiterhin Verfahren, bei denen ein Temperaturgradient auf Grund der Zulauftemperaturen nicht größer als 80 °C, besonders bevorzugt kleiner 40 °C ist.
In einer Verfahrensvariante wird eine Flüssig-Flüssig-Extraktion durchgeführt. Es ist auch möglich, hier ein unter Normbedingungen als Gas vorliegendes Gas- oder Gasgemisch einzusetzen, sofern mindestens ein Gas unter den Extraktionsbedingungen als Flüssigkeit vorliegt. So können beispielsweise unter erhöhtem Druck Propen und Propan in einer Flüssig Flüssig-Extraktion getrennt werden.

Eine weitere Variante des erfindungsgemäßen Verfahrens ist die Flüssig-Gas-Extraktion. Diese wird in der Regel wie eine Gaswäsche mit einer Flüssigkeit durchgeführt, wobei sich eine Extraktion im Gegenstrom anbietet. Bevorzugt wird hier eine Extraktion mehrerer Gase mit einer flüssigen Phase, die aus mindestens einer Ionischen Flüssigkeit besteht oder diese in den genannten Verhältnissen enthält, durchgeführt. Es ist möglich, dass mindestens eines dieser Gase unter Normbedingungen (20 °C, 756 Torr) eine Flüssigkeit ist, die unter den Extraktionsbedingungen als Gas vorliegt. Diese Verfahrensvariante ist zur extraktiven Trennung eines Gemisches von Flüssigkeiten geeignet, wobei dieses Gemisch zunächst verdampft und dieser Dampf (Gas) mit einer, eine ionische Flüssigkeit enthaltende flüssige Phase, extrahiert wird. Die erfindungsgemäße Flüssig-Gas-Extraktion kann z. B. in Rieseltürmen oder Kolonnen mit Einbauten im Gegenstrom durchgeführt werden; in einem entsprechenden Temperaturbereich ist auch der Einsatz einer Blasensäule, d. h. die Verwendung der eine Ionischen Flüssigkeit enthaltenden flüssigen Phase als kontinuierliche Phase mit einer Gasphase als dispersen Phase denkbar.

In beiden Fällen, bei Flüssig-Flüssig- und Flüssig-Gas-Extraktion, kann die Extraktion im Gegenstrom erfolgen. Bevorzugt werden Verfahren, bei denen die zu extrahierende Komponente vollständig, jedoch mindestens teilweise zu über 50% aus der Eduktmischung entfernt wird.

Die Extraktionen werden bevorzugt bei Drücken von 0.1 bis 64 bar, besonders bevorzugt zwischen 1 und 24 bar durchgeführt. Die Temperaturen liegen im Bereich zwischen -10°C und 200°C, bevorzugt zwischen 20°C und 120°C.
Bei den Flüssig-Flüssig-Extraktionen beträgt das Massenverhältnis der Phasen während der Extraktion bevorzugt zwischen 1000 : 1 bis 1:1000 Gew.%, besonders bevorzugt 100 : 1 bis 1: 100 Gew.-%. Bei Flüssig-Gas-Extraktionen beträgt das Verhältnis der Volumendurchsätze von Gasphase zu Flüssigphase bevorzugt 0,01 bis 50 m³/m³, wenn die Gasphase die disperse Phase bildet, bevorzugt 1 bis 3000 m³/m³, wenn die Flüssigphase die disperse Phase bildet.
Als ionische Flüssigkeit werden im Rahmen dieser Erfindung Verbindungen verstanden, die mindestens aus einem Anion und einem Kation bestehen und über 25°C als Flüssigkeit vorliegen.
Bevorzugt werden Ionische Flüssigkeiten, bei denen eine einfach oder mehrfach positiv geladene organische Verbindung das Kation bildet. Beispiele für solche Kationen sind 1,3-disubstituierte Imidazole, N-substituierte Pyridine und quartäre Ammonium- oder Phosphoniumionen.

Im erfindungsgemäßen Verfahren werden ionische Flüssigkeiten mit den nachfolgenden Kationen besonders bevorzugt: 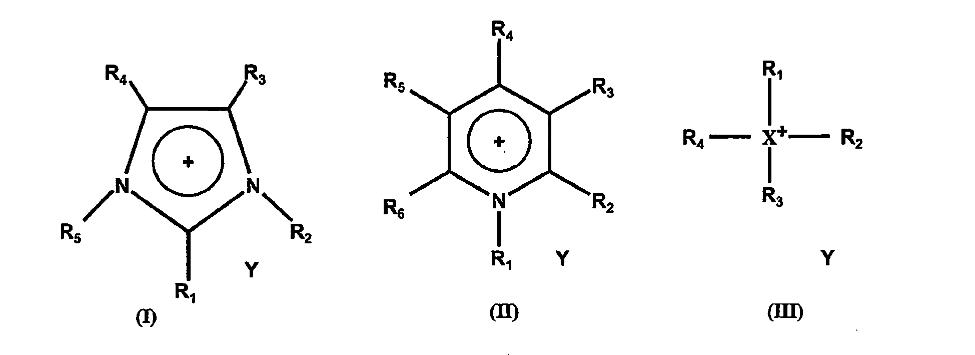 mit
X = N, P
R₁, R₂, R₃, R₄, R₅, R₆ = jeweils gleiche oder verschiedene Alkyl-, Alkoxy- oder Arylreste mit 1-25 Kohlenstoffatomen.

Typische Anionen der erfindungsgemäß eingesetzten Ionischen Flüssigkeiten sind Halogenide, Aluminate, Borate, Sulfate, Sulfonate, Anionen von Carbonsäuren, und Phosphate.

Im erfindungsgemäßen Verfahren werden ionische Flüssigkeiten mit den nachfolgenden Anionen Y besonders bevorzugt:
PF₆⁻, Br⁻, F⁻, Cl⁻, I⁻, NO₃; AlCl₄⁻, BF₄⁻, B(R₇)₄ R₇OSO₃⁻, R₇SO₃⁻, R₇CO₂⁻, R₇OPO₃ ²⁻ oder (R₇O)(R₈O)PO₂⁻, wobei R₇, R₈ für Alkyl- oder Arylreste mit 1-20 Kohlenstoffatomen oder H steht.

Die in der Extraktion eingesetzte Ionische Flüssigkeit wird vorteilhaft nach der Extraktion von den extrahierten Komponenten befreit und ganz oder teilweise in die Extraktion zurückgeführt. Die Abtrennung der extrahierten Komponenten kann beispielsweise destillativ oder durch Extraktion erfolgen. Die durch die Extraktion erhaltenen Komponenten stellen oftmals wertvolle Rohstoffe zur Erzeugung chemischer Produkte dar. So können Butene, die aus einer Mischung von Butenen und Butanen abgetrennt werden, katalytisch zu C₈-Olefinen dimerisiert werden. Aus diesen C₈-Olefinen können beispielsweise über Hydroformylierung und Hydrierung Weichmacheralkohole erhalten werden, die Einsatz in Kunststoffadditiven finden. 1,3-Butadien, dass man aus einer Mischung von C₄-Kohlenwasserstoffen (Crack-C₄) abtrennt, ist eine vielseitig eingesetzte Basischemikalie.

## Patentansprüche

1. Verfahren zur Flüssig-Flüssig-Extraktion oder Flüssig-Gas-Extraktion von Olefinen aus einer Mischung organischer Verbindungen von Olefinen und Aliphaten,
**dadurch gekennzeichnet,**
**dass** die Olefine mit einer mindestens eine ionische Flüssigkeit enthaltenden Phase extrahiert werden, wobei die Extraktion im Gegenstrom durchgeführt wird und die die ionische Flüssigkeit aufweisende Phase aus der ionischen Flüssigkeit besteht oder weitere Komponenten, ausgewählt aus Kohlenwasserstoffen, Alkoholen, Carbonsäuren, Carbonsäureestern, Lactonen, Lactamen, Amiden, Nitrilen, Carbonaten, Aminen und Wasser, enthält.

2. Verfahren nach Anspruch 1,
**dadurch gekennzeichnet,**
**dass** die organischen Verbindungen die gleiche Anzahl von Kohlenstoffatomen aufweisen.

3. Verfahren nach Anspruch 1,
**dadurch gekennzeichnet,**
**dass** die organischen Verbindungen Isomere sind.

4. Verfahren nach einem der Ansprüche 1 bis 3,
**dadurch gekennzeichnet,**
**dass** die Ionische Flüssigkeit als Kation Verbindungen der allgemeinen Formeln 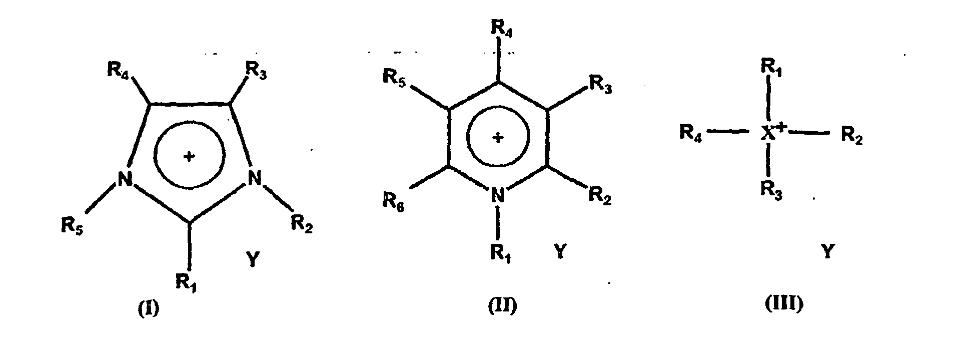 mit
X = N, P
R₁, R₂, R₃, R₄, R₅, R₆ = jeweils gleiche oder verschiedene Alkyl-, Alkoxy- oder Arylreste mit 1-25 Kohlenstoffatomen
aufweist.

5. Verfahren nach einem der Ansprüche 1 bis 4,
**dadurch gekennzeichnet**
**dass** die Ionische Flüssigkeit als Anion Y PF₆⁻, Br⁻, F⁻, Cl⁻, I⁻, NO₃⁻, AlCl₄⁻, BF₄⁻, B(R₇) ₄ R₇OSO₃⁻, R₇SO₃⁻, R₇CO₂⁻, R₇OPO₃²⁻ oder (R₇O)(R₈O)PO₂⁻ enthält, wobei R₇, R₈ für Alkyl- oder Arylreste mit 1-20 Kohlenstoffatomen oder H steht.

6. Verfahren nach einem der Ansprüche 1 bis 5,
**dadurch gekennzeichnet,**
**dass** eine Extraktion mehrerer Gase durchgeführt wird, wobei mindestens eines dieser Gase unter Normbedingungen eine Flüssigkeit ist, die unter den Extraktionsbedingungen als Gas vorliegt.

7. Verfahren nach einem der Ansprüche 1 bis 5,
**dadurch gekennzeichnet,**
**dass** eine Extraktion mehrerer Flüssigkeiten durchgeführt wird, wobei mindestens eine dieser Flüssigkeiten unter Normbedingungen ein Gas ist, das unter den Extraktionsbedingungen als Flüssigkeit vorliegt.

8. Verfahren nach einem der Ansprüche 1 bis 7,
**dadurch gekennzeichnet,**
**dass** Butene aus einer Mischung von Butenen und Butanen extrahiert werden.

9. Verfahren nach einem der Ansprüche 1 bis 7,
**dadurch gekennzeichnet,**
**dass** Butadien aus einer Mischung von Butenen und Butanen extrahiert wird.

10. Verfahren nach einem der Ansprüche 1 bis 7,
**dadurch gekennzeichnet,**
**dass** Isobuten aus einer Mischung von Butenen und Butanen extrahiert wird.

11. Verfahren nach einem der Ansprüche 1 bis 10,
**dadurch gekennzeichnet,**
**dass** der Anteil der ionischen Flüssigkeit in der Extraktionsphase mindestens 25 Gew.-% beträgt.

## Claims

1. Process for the liquid-liquid extraction or liquid-gas extraction of olefins from a mixture of organic compounds of olefins and aliphatics, **characterized in that** the olefins are extracted by means of a phase comprising at least one ionic liquid, with the extraction being carried out in countercurrent and the phase comprising the ionic liquid consisting of the ionic liquid or comprising further components selected from among hydrocarbons, alcohols, carboxylic acids, carboxylic esters, lactones, lactams, amides, nitriles, carbonates, amines and water.

2. Process according to Claim 1, **characterized in that** the organic compounds have the same number of carbon atoms.

3. Process according to Claim 1, **characterized in that** the organic compounds are isomers.

4. Process according to any of Claims 1 to 3, **characterized in that** the ionic liquid comprises compounds of the formulae 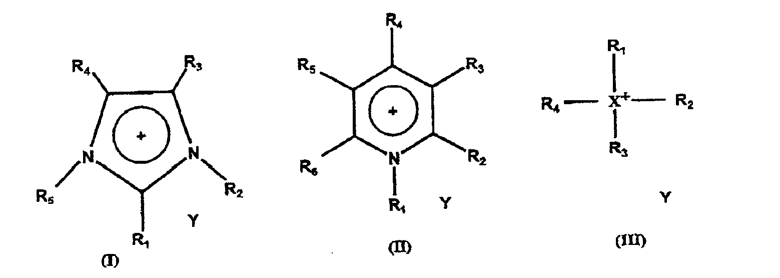 where
X = N, P
R₁, R₂, R₃, R₄, R₅, R₆ = identical or different alkyl, alkoxy or aryl radicals each having 1-25 carbon atoms,
as cation.

5. Process according to any of Claims 1 to 4, **characterized in that** the ionic liquid comprises PF₆⁻, Br⁻, F⁻, Cl⁻, I⁻, NO₃⁻, AlCl₄⁻, BF₄⁻, B(R₇)₄⁻, R₇OSO₃⁻, R₇SO₃⁻, R₇CO₂⁻, R₇OPO₃²⁻ or (R₇O) (R₈O) PO₂⁻, where R₇, R₈ are alkyl or aryl radicals each having 1-20 carbon atoms or H, as anion Y.

6. Process according to any of Claims 1 to 5, **characterized in that** an extraction of a plurality of gases of which at least one is a liquid under ambient conditions but is present as a gas under the extraction conditions is carried out.

7. Process according to any of Claims 1 to 5, **characterized in that** an extraction of a plurality of liquids of which at least one is a gas under ambient conditions but is present as a liquid under the extraction conditions is carried out.

8. Process according to any of Claims 1 to 7, **characterized in that** butenes are extracted from a mixture of butenes and butanes.

9. Process according to any of Claims 1 to 7, **characterized in that** butadiene is extracted from a mixture of butenes and butanes.

10. Process according to any of Claims 1 to 7, **characterized in that** isobutene is extracted from a mixture of butenes and butanes.

11. Process according to any of Claims 1 to 10, **characterized in that** the proportion of ionic liquid in the extractant phase is at least 25% by weight.

## Revendications

1. Procédé pour l'extraction liquide-liquide ou l'extraction liquide-gaz d'oléfines à partir d'un mélange de composés organiques d'oléfines et d'aliphates, **caractérisé en ce que** les oléfines sont extraites avec une phase contenant au moins un liquide ionique, l'extraction étant réalisée à contre-courant et la phase présentant le liquide ionique étant constituée par le liquide ionique ou contenant d'autres composants, choisis parmi les hydrocarbures, les alcools, les acides carboxyliques, les esters d'acide carboxylique, les lactones, les lactames, les amides, les nitriles, les carbonates, les amines et l'eau.

2. Procédé selon la revendication 1, **caractérisé en ce que** les composés organiques présentent le même nombre d'atomes de carbone.

3. Procédé selon la revendication 1, **caractérisé en ce que** les composés organiques sont des isomères.

4. Procédé selon l'une quelconque des revendications 1 à 3, **caractérisé en ce que** le liquide ionique présente, comme cation, des composés de formules générales 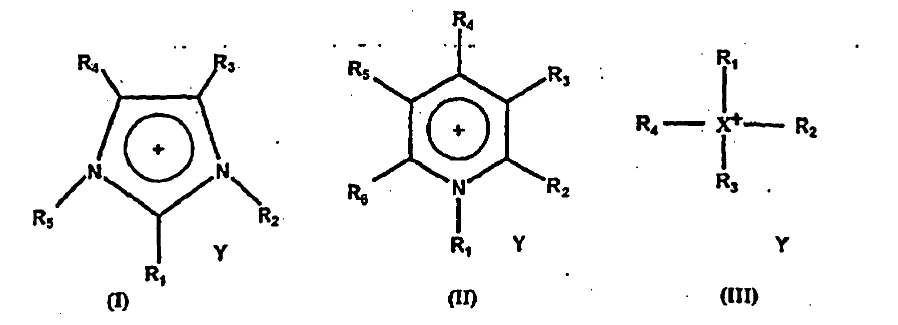 avec
X = N, P
R₁, R₂, R₃, R₄, R₅, R₆ représentant à chaque fois des radicaux alkyle, alcoxy ou aryle, identiques ou différents, comprenant 1-25 atomes de carbone.

5. Procédé selon l'une quelconque des revendications 1 à 4, **caractérisé en ce que** le liquide ionique contient, comme anion Y, PF₆⁻, Br⁻, F⁻, Cl⁻, I⁻, NO3⁻, AlCl₄⁻, BF₄ ⁻, B(R₇)₄, R₇OSO₃⁻, R₇SO₃⁻, R₇CO₂⁻, R₇OPO₃ ²⁻ ou (R₇O) (R₈O) PO₂⁻, où R₇, R₈ représentent des radicaux alkyle ou aryle, comprenant 1-20 atomes de carbone ou H.

6. Procédé selon l'une quelconque des revendications 1 à 5, **caractérisé en ce qu'**on réalise une extraction de plusieurs gaz, au moins un de ces gaz étant un liquide dans des conditions normales, qui se trouve sous forme d'un gaz dans les conditions d'extraction.

7. Procédé selon l'une quelconque des revendications 1 à 5, **caractérisé en ce qu'**on réalise une extraction de plusieurs liquides, au moins un de ces liquides étant un gaz dans des conditions normales, qui se trouve sous forme d'un gaz dans les conditions d'extraction.

8. Procédé selon l'une quelconque des revendications 1 à 7, **caractérisé en ce qu'**on extrait des butènes à partir d'un mélange de butènes et de butanes.

9. Procédé selon l'une quelconque des revendications 1 à 7, **caractérisé en ce qu'**on extrait du butadiène à partir d'un mélange de butènes et de butanes.

10. Procédé selon l'une quelconque des revendications 1 à 7, **caractérisé en ce qu'**on extrait de l'isobutène à partir d'un mélange de butènes et de butanes.

11. Procédé selon l'une quelconque des revendications 1 à 10, **caractérisé en ce que** la proportion de liquide ionique dans la phase d'extraction est d'au moins 25% en poids.
